# EUROPÄISCHE PATENTSCHRIFT

(11) **EP 2 288 488 B1**
(45) Veröffentlichungstag und Bekanntmachung des Hinweises auf die Patenterteilung: **05.09.2012**
(21) Anmeldenummer: 09768913.7
(22) Anmeldetag: 11.06.2009
(51) Int. Cl.: B29C 70/84, B29C 65/00

(54) **VERFAHREN ZUR FERTIGUNG EINES ROTORBLATTES FÜR EINE WINDENERGIEANLAGE**
METHOD FOR PRODUCTION OF A ROTOR BLADE FOR WIND ENERGY PLANT
PROCÉDÉ DE FABRICATION D'UNE PALE DE ROTOR D'UNE ÉOLIENNE

(30) Priorität: 27.06.2008 DE 102008030132; 31.07.2008 DE 102008035588
(43) Veröffentlichungstag der Anmeldung: 02.03.2011
(73) Patentinhaber: REpower Systems SE, 22297 Hamburg (DE)
(72) Erfinder: KULENKAMPFF, Jens, 24119 Kronshagen (DE); FAULKNER, Benn, Ningwood Isle of Wight PO 30 4 NH (GB)
(74) Vertreter: Seemann, Ralph
(86) Internationale Anmeldenummer: PCT/EP2009/004210
(87) Internationale Veröffentlichungsnummer: WO 2009/156064

(56) Entgegenhaltungen:
- EP-A- 1 184 566
- EP-A- 2 033 769
- WO-A-2006/002621
- DE-A1- 10 235 496
- NL-C2- 1 001 200
- US-A1- 2007 140 858

## Beschreibung

Die Erfindung betrifft ein Verfahren zur Fertigung eines Rotorblattes für eine Windenergieanlage, das sich in betriebsbereitem Zustand von einem Blattwurzelbereich zum Anschluss an eine Rotornabe der Windenergieanlage bis zu einer Blattspitze längserstreckt und das für seine Fertigung in wenigstens zwei Segmente eingeteilt ist, wobei das Rotorblatt für seine Fertigung in mehr als zwei Segmente segmentiert wird, wobei wenigstens für einige dieser Segmente separate, zeitlich parallel zu verwendende Fertigungsformen vorgesehen werden und die Segmente zur Endfertigung des Rotorblattes außerhalb einer Fertigungsform miteinander zu einem Rotorblatt oder Rotorblattteil verbunden werden, wobei wenigstens die Verbindung der Segmente in einer separaten Verbindungseinrichtung, insbesondere in einem Kleberahmen, erfolgt.

Geteilte bzw. segmentierte Rotorblätter für eine Windenergieanlage sind zur Erleichterung ihrer Herstellung, ihres Transports und ihrer Montage prinzipiell seit langem bekannt, zum Beispiel aus der DE 31 13 079 A1. Da bevorzugt beim Stand der Technik auch der Transport erleichtert werden soll, werden die Segmente des Rotorblattes bevorzugt erst am Aufstellungsort der Windenergieanlage zusammengebaut und dafür auch konzipiert.

US 2007/0140858 A1 betrifft ein modular konstruiertes Rotorblatt mit einer Vorderkante und einer Hinterkante mit einer Mehrzahl von entlang gemeinsamer Stoßkanten miteinander verbundenen Rotorblattsektionen sowie ein Herstellungsverfahren gemäβ dem Oberbegriff des Anspruchs 1. Eine Stoßkante zwischen den Sektionen der Vorderkante und der Hinterkante ist in Längsrichtung des Rotorblatts ausgerichtet. Wenigstens eine weitere Stoßkante ist von dieser in Längsrichtung erstreckten Stoßkante weg gerichtet. So wird das Rotorblatt in seiner Längserstreckung segmentiert.

In WO 2006/002621 A1 sind Rotorblätter für Windenergieanlagen aus wenigstens zwei getrennten Sektionen sowie ein Verfahren zu deren Zusammenbau offenbart, wobei die Enden der Sektionen eine oder mehrere Verstärkungsstrukturen aufweisen, die im zusammengebauten Zustand des Rotorblatts ineinander greifen, wodurch die Verbindungsfläche vergrößert wird. Damit wird das in seiner Längserstreckung segmentierte Rotorblatt an seinen Verbindungsstellen verstärkt.

Der Erfindung liegt demgegenüber die Aufgabe zugrunde, die Fertigung des Rotorblatts, insbesondere für eine Serienfertigung, zu erleichtern und zeitlich verkürzbar zu machen.

Diese Aufgabe wird erfindungsgemäß durch den Gegenstand des Anspruchs 1 gelöst, wobei das Rotorblatt für seine Fertigung in mehr als zwei Segmente segmentiert wird, wobei wenigstens für einige dieser Segmente separate, zeitlich parallel zu verwendende Fertigungsformen vorgesehen werden und die Segmente zur Endfertigung des Rotorblattes außerhalb einer Fertigungsform miteinander zu einem Rotorblatt oder Rotorblattteil verbunden werden, wobei wenigstens die Verbindung der Segmente in einer separaten Verbindungseinrichtung, insbesondere in einem Kleberahmen, erfolgt, wobei durch zwei im Wesentlichen in Längserstreckungsrichtung des Rotorblattes verlaufende Unterteilungen des Rotorblattes ein Mittellängssegment des Rotorblattes ausgebildet wird, das die Gurte und Stege umfasst.

Durch das erfindungsgemäße Verfahren können mit Vorteil kleinere Segmente zeitlich parallel gefertigt werden und dadurch der gesamte Fertigungszyklus verkürzt und die beteiligten Fertigungsformen und Segmente handlicher gestaltet werden, gegenüber einer Fertigung, bei der ein Rotorblatt, gegebenenfalls bestehend aus zwei Halbschalen, insgesamt in einer großen Fertigungsform mit langer Fertigungszeit gefertigt wird. Dadurch wird mit Vorteil die Produktivität erhöht. Auch eine Qualitätskontrolle wird erleichtert, da bei einem eventuell auftretenden Ausschuss durch einen Fehler in der Fertigung gegebenenfalls nur ein Segment betroffen ist und nicht das ganze Rotorblatt. Für die Verbindung der Segmente zu dem endgültigen Rotorblatt ist erfindungsgemäß mit Vorteil zudem keine aufwendige Fertigungsform notwendig und vorgesehen, sondern eine Verbindung zur Endfertigung außerhalb einer oder jeglicher Fertigungsform konzipiert.

Eine Weiterbildung der Erfindung sieht zudem vor, dass das Rotorblatt oder Rotorblattteil auch außerhalb einer Fertigungsform nachbehandelt werden kann, zum Beispiel nachgetempert werden kann.

Eine andere Weiterbildung des erfindungsgemäßen Verfahrens sieht vor, dass das Rotorblatt oder Rotorblattteil außerhalb einer Fertigungsform endbehandelt wird, zum Beispiel ausgehärtet wird, von Klebstoffresten oder Harzresten befreit wird oder dergleichen. Eine bevorzugte Ausführungsform des erfindungsgemäßen Verfahrens zeichnet sich dadurch aus, dass die Segmente mit einer Kunststofftechnik gefertigt werden. In Betracht kommt dabei insbesondere, dass bei der Kunststofftechnik wenigstens ein Harz und wenigstens eine Faserlage, insbesondere aus Glasfasern und/oder Kohlefasern, verwendet wird. Bevorzugt wird erfindungsgemäß eine Spritzpresstechnik (Resin Transfer Moulding; RTM) oder eine Infusionstechnik (Resin Infusion Moulding; RIM) verwendet, insbesondere eine durch Vakuum unterstütze Infusionstechnik (Vacuum Assisted Resin Infusion; VAR). Alternativ oder zusätzlich kann aber auch eine Laminiertechnik verwendet werden.

Eine nächste Weiterbildung der Erfindung sieht vor, dass wenigstens eine etwa in Längserstreckung des Rotorblattes verlaufende Unterteilung zur Segmentierung des Rotorblattes vorgesehen ist. Dies hilft die Verwendungszeiten der beteiligten Fertigungsformen zu verkürzen und beeinträchtigt gleichzeitig nicht die Struktur und Festigkeit des fertigen Rotorblattes, da sich dennoch schon in der Fertigung weiterhin Kraft leitende und/oder übertragende Teile und Segmente ununterbrochen im Wesentlichen über die gesamte Länge des Rotorblattes erstrecken können. Dennoch ist es erfindungsgemäß auch möglich, zusätzlich oder alternativ quer zur Längserstreckung des Rotorblattes verlaufende Teilungen vorzusehen und die dadurch ausgebildeten Segmente schnell und sicher, ohne Qualitätseinbuße, miteinander zu verbinden.

Eine Weiterbildung der Erfindung sieht vor, dass in der Verbindungseinrichtung ein oder mehrere Stege, ein oder mehrere Gurte, ein oder mehrere Rotorblattwurzelteile, wenigstens ein Rotorblattspitzensegment, Schalensegmente und/oder aus Segmenten gebildete Rotorblattschalen miteinander verbunden werden. Insbesondere können in der Verbindungseinrichtung Segmente und/oder (andere) Bauteile miteinander verklebt werden.

Eine andere Weiterbildung der Erfindung sieht vor, dass zur Erwärmung, Temperung, Trocknung und/oder Aushärtung von Bauteilen und/oder Bauteilverbindungen wenigstens eine Heizeinrichtung, vorzugsweise im Bereich der Verbindungseinrichtung, verwendet wird.

Eine nächste Weiterbildung der Erfindung zeichnet sich dadurch aus, dass zunächst die Segmente und/oder anderen Bauteile ausgehärtet oder vorgehärtet werden, danach in die Verbindungseinrichtung eingegeben werden, dort miteinander verbunden werden und danach die Verbindung und/oder der Verbund der Segmente und/oder anderen Bauteile getrocknet und/oder ausgehärtet wird, was ebenfalls mit Vorteil in der Verbindungseinrichtung ohne Belegung einer Fertigungsform geschehen kann.

Eine andere Weiterbildung der Erfindung zeichnet sich mit besonderem Vorteil dadurch aus, dass eine zeitlich parallele Fertigung von Bauteilen durchgeführt wird, bei der die zu fertigenden Bauteile, insbesondere nach ihrer Art, Beschaffenheit und/oder Größe, so konzipiert sind oder werden, dass die Formbelegungszeiten der dafür parallel genutzten Fertigungsformen aneinander angeglichen werden und/oder die Belegungszeit der am längsten zu belegenden Fertigungsform, die die Zykluszeit eines Fertigungszyklus bestimmt, minimiert wird, was zu einer erheblichen Erhöhung der Produktivität führt bzw. beiträgt.

Insbesondere kann zudem nach einer Weiterbildung des erfindungsgemäßen Verfahrens durch die Segmentierung wenigstens eine Gurt-Steg-Baugruppe vorgefertigt und in die Verbindungseinrichtung zur Verbindung mit anderen Segmenten des Rotorblattes gegeben werden. Dabei kann die Gurt-Steg-Baugruppe bevorzugt im Wesentlichen als ein Kastenholm, umfassend wenigstens zwei Gurte und zwei Stege, erstellt werden.

Gemäß der Erfindung ist vorgesehen, dass durch zwei im Wesentlichen in Längserstreckungsrichtung des Rotorblattes verlaufende Unterteilungen des Rotorblattes ein Mittellängssegment des Rotorblattes ausgebildet wird, das die Gurte und Stege umfasst. Zusätzlich kann vorgesehen sein, dass das Rotorblatt durch wenigstens eine im Wesentlichen in Längserstreckungsrichtung des Rotorblattes verlaufende Unterteilung wenigstens in ein Vorderkantensegment und ein Hinterkantensegment unterteilt ist.

Eine Weiterbildung der Erfindung sieht vorzugsweise vor, dass die Unterteilungen des Rotorblatts bis durch Rotorblattwurzelteile hindurch vorgesehen werden, so dass auch bspw. Einlegeteile für eine Rotorblattwurzel segmentiert sein können bzw. zu Segmenten gehören.

Eine andere Weiterbildung der Erfindung sieht vor, dass bei dem Rotorblatt zur Segmentierung eine Saug- und eine Druckseite oder eine Oberschale und eine Unterschale voneinander geteilt werden. Durch erfindungsgemäße, zusätzliche Unterteilungen des Rotorblattes in Längsrichtung können in Verbindung hiermit zum Beispiel insbesondere Viertelungen oder Sechstelungen des Rotorblattes für eine Segmentierung ausgebildet werden.

Ausführungsbeispiele, aus denen sich auch weitere erfinderische Merkmale ergeben könnten, auf die die Erfindung in ihrem Umfang aber nicht beschränkt ist, sind in der Zeichnung dargestellt. Es zeigen jeweils schematisch:
- Fig. 1: eine Draufsicht auf eine Halbschale eines Rotorblatts,
- Fig. 2: ein Ausführungsbeispiel einer erfindungsgemäßen Segmentierung eines Rotorblatts,
- Fig. 3: ein Beispiel einer Segmentierung eines Rotorblatts und
- Fig. 4: ein weiteres Beispiel einer Segmentierung eines Rotorblatts.

Es sei zunächst vorausgeschickt, dass in den Figuren der Zeichnung nur prinzipielle Beispiele und Ausführungsbeispiele zur Erfindung gezeigt sind, bei denen vielfältige Variationen im Rahmen der Erfindung möglich sind. Zudem ist keine der Figuren maßstabsgetreu oder überhaupt maßgetreu gezeichnet. Die dargestellten Ausführungsbeispiele sollen nur als prinzipielle Möglichkeiten schematisch skizziert sein.

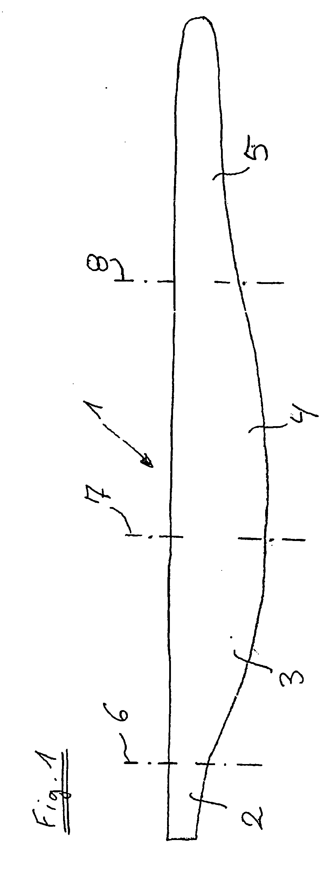

Fig. 1 zeigt eine Draufsicht auf eine Halbschale 1 eines Rotorblatts. Die gezeigte Halbschale 1 kann in mehrere Segmente 2 bis 5 unterteilt sein. Von diesen Segmenten 2 bis 5 können jeweils alle oder einige im Wesentlichen zeitlich parallel zueinander gefertigt oder vorgefertigt werden und dann in der in Fig. 1 dargestellten Weise zu einer Halbschale 1 eines Rotorblatts verbunden werden, was in einer entsprechenden Verbindungseinrichtung geschehen kann. In dieser Verbindungseinrichtung können die Segmente 2 bis 5 zum Beispiel miteinander verklebt werden.

Es ist vorgesehen, dass ein Segment durch eine sogenannte Rotorblattwurzel 2 gebildet wird und die übrige Halbschale in drei Segmente 2 bis 4 unterteilt ist. Die Segmente 3 bis 5 sind durch Querteilungen 6 bis 8 so konzipiert, dass sie etwa gleich groß sind und etwa gleich schnell gefertigt werden können. Diese Segmente 3 bis 5 könnten zum Beispiel durch eine Längsteilung auch in noch weitere Segmente unterteilt sein oder die Halbschale 1 könnte bspw. auch nur durch Längsteilungen unterteilt bzw. segmentiert sein.

Über die Segmente 2 bis 5 verläuft ein ungeteilter, diese Segmente verbindender Gurt der auch und besonders zur Kräfteübertragung bei der Belastung eines an einer Windenergieanlage angeordneten Rotorblattes dient. Statt eines Gurtes können gegebenenfalls auch zwei oder mehr zueinander im Wesentlichen parallel, in einem Abstand zueinander verlaufende Gurte vorgesehen sein, also beispielsweise ein sogenannter Vorderkantengurt und ein Hinterkantengurt, bezogen auf die Kanten des Rotorblatts, denen sie jeweils näher sind.

Ein vollständiges Rotorblatt wird zum Beispiel dadurch als Hohlkörper ausgebildet, dass auf eine Halbschale 1 eine zweite, spiegelverkehrte Halbschale 1 aufgesetzt wird und die beiden Halbschalen 1 miteinander verbunden werden. In diesen Hohlkörper kann beispielsweise heiße Luft eingeleitet werden, um das Rotorblatt noch weiter zu tempern und vollständig auszuhärten. Die Halbschalen 1 bzw. deren Segmente werden vorzugsweise mittels einer Kunststofftechnik ausgebildet, indem zum Beispiel Glasfaser- und/oder Kohlefaserlagen in einer Fertigungsform, die die dreidimensionale Formgebung dieser Segmente vorgibt, eingelegt oder eingeschichtet werden und dann insgesamt mit einer Vakuumfolie abgedeckt werden. Diese Vakuumfolie wird ringsherum entlang der Ränder auf der Fertigungsform vakuumdicht abgedichtet, zum Beispiel mit gummiartigen Verklebungslinien oder beidseitigen Klebebändern. Damit bildet dann diese Vakuumfolie die flexible Gegenform zur festen Fertigungsform. Bei der sogenannten Vakuuminfusionstechnik wird dann durch Luftentzug zwischen der Vakuumfolie und der Fertigungsform ein Unterdruck, ein "Vakuum", erzeugt. Durch diesen Unterdruck werden die Faserlagen aufeinandergepresst und es wird aus einem Reservoir ein Harz unter der Vakuumfolie eingesogen, das sich über die ganze Form gleichmäßig verteilt und die Faserlagen nach seinem Aushärten fest miteinander zu einem festen Kunststoffformteil, dem jeweiligen Segment, verbindet. Eine gleichmäßige Verteilung des Harzes kann dadurch erreicht werden, dass mehrere Zuleitungen für das Harz gelegt werden und geeignete Netz- oder Gitterlagen mit in die Form eingelegt werden, die die Verteilung und das flächige Verfließen des Harzes begünstigen und leiten.

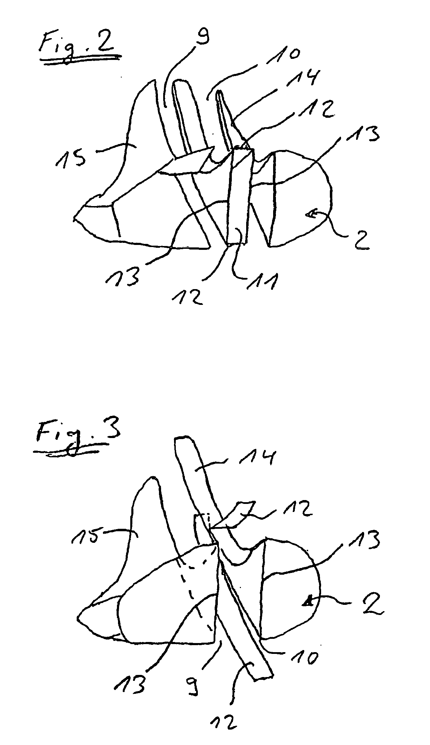

Die Fig. 2 bis 4 zeigen jeweils schematisch und in verkürzender Perspektive und mit Blick in eine Rotorblattwurzel 2 beispielhafte Segmentierungen eines Rotorblatts.

Fig. 2 zeigt ein Ausführungsbeispiel einer erfindungsgemäßen Segmentierung eines Rotorblatts. Bei dieser Segmentierung ist durch zwei im Wesentlichen in Längserstreckungsrichtung des Rotorblattes verlaufende Unterteilungen 9, 10 des Rotorblattes ein Mittellängssegment 11 des Rotorblattes ausgebildet, das die Gurte 12 und Stege 13 umfasst. Gleichzeitig sind dadurch wenigstens ein Vorderkantensegment 14 und ein Hinterkantensegment 15 ausgebildet. Die Unterteilungen 9, 10 setzen sich bis in die Rotorblattwurzel 2 fort. Bei dieser Segmentierung entstehen somit im Wesentlichen drei Segmente 11, 14, 15, die zeitlich parallel, und damit schneller, in unterschiedlichen Fertigungsformen gefertigt und später, außerhalb jeglicher Fertigungsform, zu einem vollständigen Rotorblatt miteinander verbunden werden können, wodurch ein Rotorblatt entsteht, das qualitativ und insbesondere hinsichtlich der Kräfteübertragung und Belastbarkeit, einem bekannten Rotorblatt in nichts nachsteht.

Fig. 3 zeigt ein weiteres Beispiel einer Segmentierung eines Rotorblatts. Auch hier entstehen durch zwei Längsteilungen 9, 10 ein Vorderkantensegment 14 und ein Hinterkantensegment 15. Anstelle eine Mittelsegments werden hier aber zusätzlich einzelne Gurte 12 und Stege 13 zum Aufbau des Rotorblatts verwendet.

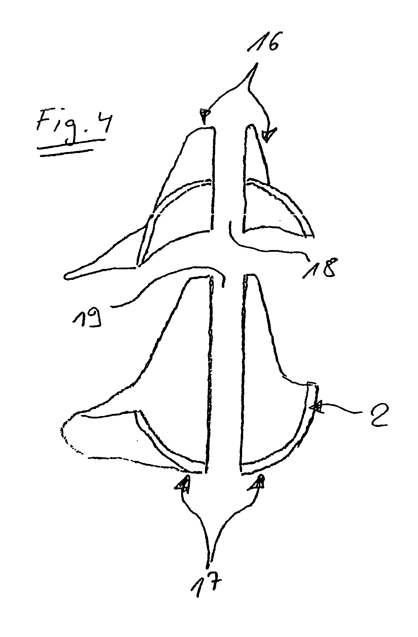

Fig. 4 zeigt ein weiteres Beispiel einer Segmentierung eines Rotorblatts. Bei diesem Beispiel ist das Rotorblatt in eine Unterschale 16 und in eine Oberschale 17 geteilt. Zusätzlich sind diese beiden Schalen 16, 17 durch jeweils eine Längsteilung 18, 19 weiter segmentiert. Auch hier setzen sich die Unterteilungen 18, 19 durch die Rotorblattwurzel 2 fort und das Rotorblatt ist letztlich im Wesentlichen geviertelt.

Zum Abschluss sollen noch einmal einige Merkmale und Vorteile der Erfindung hervorgehoben werden. Auch diese Hervorhebung oder Wiederholung soll aber keine Einschränkung des Umfanges der Erfindung bedeuten oder bewirken.

Zunächst einmal kann der Erfindung der Gedanke zugrunde gelegt werden, einzelne Segmente eines Rotorblattes zu fertigen, die jeweils in eigenen Fertigungsformen zeitlich parallel zueinander gefertigt werden können. Bei einer parallelen Fertigung von Blattsegmenten in verschiedenen Formen wird die Teilform mit der längsten Zykluszeit bestimmend für die Zykluszeit des Gesamtprozesses, die so mit Vorteil entsprechend verkürzt werden kann. Eine geschickte Segmentierung des Blattes erlaubt dabei einerseits eine Angleichung der Formzeiten aneinander und dadurch einen hohen Nutzungsgrad, und andererseits eine Reduktion der Zykluszeit, womit die Zykluszeit des Gesamtprozesses und damit der Blattdurchsatz erhöht werden kann.

Zum Erreichen eines bestimmten Blattbedarfs oberhalb des aus einem einzelnen Formsatz zu deckenden Bedarfs muss nicht der gesamte Formensatz vervielfacht werden, sondern nur die Formen mit einer Zykluszeit nahe der Gesamtzykluszeit. Formen mit geringer Zykluszeit können mehrfach genutzt werden, um die anderen Formen zu bedienen. Dadurch wird gleichzeitig der Platzbedarf verringert und die Produktivität erhöht. Gleichzeitig wird auch der Investitionsbedarf verringert. Auch z. B. Verklebungen und Temperierungen von Segmenten können außerhalb der Formen und parallel erfolgen. Auch durch einen hierfür gegebenenfalls erforderlichen Kleberahmen werden der Platzbedarf und der Investitionsbedarf nicht wesentlich erhöht.

## Patentansprüche

1. Verfahren zur Fertigung eines Rotorblattes für eine Windenergieanlage, das sich in betriebsbereitem Zustand von einem Blattwurzelbereich zum Anschluss an eine Rotornabe der Windenergieanlage bis zu einer Blattspitze längserstreckt und das für seine Fertigung in wenigstens zwei Segmente eingeteilt ist, wobei das Rotorblatt für seine Fertigung in mehr als zwei Segmente 11,14,15 segmentiert wird, wobei wenigstens für einige dieser Segmente separate, zeitlich parallel zu verwendende Fertigungsformen vorgesehen werden und die Segmente zur Endfertigung des Rotorblattes außerhalb einer Fertigungsform miteinander zu einem Rotorblatt oder Rotorblattteil verbunden werden, wobei wenigstens die Verbindung der Segmente in einer separaten Verbindungseinrichtung, insbesondere in einem Kleberahmen, erfolgt, **dadurch gekennzeichnet, dass** durch zwei im Wesentlichen in Längserstreckungsrichtung des Rotorblattes verlaufende Unterteilungen 9,10 des Rotorblattes ein Mittellängssegment 11 des Rotorblattes ausgebildet wird, das die Gurte 12 und Stege 13 umfasst.

2. Verfahren nach Anspruch 1, **dadurch gekennzeichnet, dass** das Rotorblatt oder Rotorblattteil außerhalb einer Fertigungsform nachbehandelt wird, wobei insbesondere das Rotorblatt oder Rotorblattteil außerhalb einer Fertigungsform endbehandelt wird.

3. Verfahren nach Anspruch 1 oder 2, **dadurch gekennzeichnet, dass** die Segmente mit einer Kunststofftechnik gefertigt werden, wobei insbesondere bei der Kunststofftechnik wenigstens ein Harz und wenigstens eine Faserlage, insbesondere aus Glasfasern und/oder Kohlefasern, verwendet wird.

4. Verfahren nach Anspruch 3, **dadurch gekennzeichnet, dass** eine Spritzpresstechnik (Resin Transfer Moulding; RTM) verwendet wird.

5. Verfahren nach Anspruch 3 oder 4, **dadurch gekennzeichnet, dass** eine Infusionstechnik (Resin Infusion Moulding; RIM) verwendet wird, insbesondere eine durch Vakuum unterstütze Infusionstechnik (Vacuum Assisted Resin Infusion; VAR).

6. Verfahren nach einem der Ansprüche 3 bis 5, **dadurch gekennzeichnet, dass** eine Laminiertechnik verwendet wird.

7. Verfahren nach einem der vorhergehenden Ansprüche, **dadurch gekennzeichnet, dass** in der Verbindungseinrichtung ein oder mehrere Stege, ein oder mehrere Gurte, ein oder mehrere Rotorblattwurzelteile, wenigstens ein Rotorblattspitzensegment, Schalensegmente und/oder aus Segmenten gebildete Rotorblattschalen miteinander verbunden werden, wobei insbesondere in der Verbindungseinrichtung Segmente und/oder (andere) Bauteile miteinander verklebt werden, wobei insbesondere zur Erwärmung, Temperung, Trocknung und/oder Aushärtung von Bauteilen und/oder Bauteilverbindungen wenigstens eine Heizeinrichtung, vorzugsweise im Bereich der Verbindungseinrichtung, vorgesehen wird.

8. Verfahren nach einem der vorhergehenden Ansprüche, **dadurch gekennzeichnet, dass** zunächst die Segmente und/oder anderen Bauteile ausgehärtet oder vorgehärtet werden, danach in die Verbindungseinrichtung eingegeben werden, dort miteinander verbunden werden und danach die Verbindung und/oder der Verbund der Segmente und/oder anderen Bauteile getrocknet und/oder ausgehärtet wird.

9. Verfahren nach einem der vorhergehenden Ansprüche, **dadurch gekennzeichnet, dass** eine zeitlich parallele Fertigung von Bauteilen durchgeführt wird, bei der die zu fertigenden Bauteile, insbesondere nach ihrer Art, Beschaffenheit und/oder Größe, so konzipiert sind oder werden, dass die Formbelegungszeiten der dafür parallel genutzten Fertigungsformen aneinander angeglichen werden und/oder die Belegungszeit der am längsten zu belegenden Fertigungsform, die die Zykluszeit eines Fertigungszyklus bestimmt, minimiert wird.

10. Verfahren nach einem der vorhergehenden Ansprüche, **dadurch gekennzeichnet, dass** durch die Segmentierung wenigstens eine Gurt-Steg-Baugruppe vorgefertigt und in die Verbindungseinrichtung zur Verbindung mit anderen Segmenten des Rotorblattes gegeben wird, wobei insbesondere die Gurt-Steg-Baugruppe im Wesentlichen als ein Kastenholm, umfassend wenigstens zwei Gurte und zwei Stege, erstellt wird.

11. Verfahren nach einem der vorhergehenden Ansprüche, **dadurch gekennzeichnet, dass** das Rotorblatt durch wenigstens eine im Wesentlichen in Längserstreckungsrichtung des Rotorblattes verlaufende Unterteilung wenigstens in ein Vorderkanten und ein Hinterkantensegment unterteilt ist.

12. Verfahren nach einem der vorhergehenden Ansprüche, **dadurch gekennzeichnet, dass** die Unterteilungen des Rotorblatts bis durch Rotorblattwurzelteile hindurch vorgesehen werden.

13. Verfahren nach einem der vorhergehenden Ansprüche, **dadurch gekennzeichnet, dass** bei dem Rotorblatt zur Segmentierung eine Saug- und eine Druckseite voneinander geteilt werden.

## Claims

1. A method of producing a rotor blade for a wind turbine, which extends in the operational state longitudinally from a blade root region of the connection to a rotor hub of the wind turbine to a blade tip and which is divided for its production into at least two segments, wherein the rotor blade is segmented for its production into more than two segments (11, 14, 15), wherein at least for some of these segments separate production moulds, which are to be used at the same time, are provided and the segments are connected together for the final production of the rotor blade outside a production mould to form a rotor blade or portion of a rotor blade, wherein at least the connection of the segments occurs in a separate connecting device, particularly in an adhesive frame, **characterised in that** a central longitudinal segment (11) of the rotor blade, which includes the spar caps (12) and webs (13), is defined by two subdivisions (9, 10) of the rotar blade extending in the longitudinal direction of the rotor blade.

2. A method as claimed in claim 1, **characterised in that** the rotor blade or rotor blade portion is aftertreated outside a production mould, wherein, in particular, the rotor blade or rotor blade portion is finally treated outside a production mould.

3. A method as claimed in claim 1 or 2, **characterised in that** the segments are produced with a plastic technology, wherein, in particular, at least one resin and at least one fibre layer, particularly of glass fibres and/or carbon fibres, is used in the plastic technology.

4. A method as claimed in claim 3, **characterised in that** a transfer moulding technology (Resin Transfer Moulding; RTM) is used.

5. A method as claimed in claim 3 or 4, **characterised in that** an infusion technology (Resin Infusion Moulding; RIM) is used, particularly an infusion technology assisted by vacuum (Vacuum Assisted Resin Infusion; VAR).

6. A method as claimed in one of claims 3 to 5, **characterised in that** a lamination technology is used.

7. A method as claimed in one of the preceding claims, **characterised in that** one or more webs, one or more spar caps, one or more rotor blade route portions, at least one rotor blade tip segment, shell segments and/or rotor blade shells constituted by segments are connected together in the connecting device, wherein, in particular, segments and/or (other) components are connected together in the connecting device by adhesive, whereby in particular, at least one heating device is provided, preferably in the vicinity of the connecting device, for heating, tempering, drying and/or curing of components and/or component connections.

8. A method as claimed in one of the preceding claims, **characterised in that** the segments and/or components are firstly cured or precured, then inserted into the connecting device, connected together therein and thereafter the connection and/or the composite of the segments and/or other components is dried and/or cured.

9. A method as claimed in one of the preceding claims, **characterised in that** the production of components is performed at the same time, in which the components to be produced, are so designed in accordance with their nature, constitution and/or size that the mould occupation times of the production moulds used therefor in parallel are matched to one another and/or the occupation time of the production mould to be occupied for the longest time, which determines the cycle time of a production cycle, is minimised.

10. A method as claimed in one of the preceding claims, **characterised in that** at least one spar cap assembly is prefabricated as a result of the segmentation and is inserted into the connection device for connection with other segments of the rotor blade, wherein, in particular the spar cap assembly is constructed substantially in the form of a box spar, including at least two spar caps and two webs.

11. A method as claimed in one of the preceding claims, **characterised in that** the rotor blade is subdivided by at least one subdivision extending substantially in the longitudinal direction of the rotor blade into a front edge and a rear edge segment.

12. A method as claimed in one of the preceding claims, **characterised in that** the subdivisions of the rotor blade are provided to through rotor blade root portions.

13. A method as claimed in one of the preceding claim, **characterised in that** in the rotor 13. A method as claimed in one of the preceding claims, **characterised in that** in the rotor blade a suction side and a pressure side are divided from one another for the segmentation.

## Revendications

1. Procédé de fabrication d'une pale de rotor pour une éolienne qui s'étend, lorsque l'installation est opérationnelle, d'une zone du pied de pale à raccorder à un moyeu de rotor de l'éolienne à une extrémité de pale et qui est subdivisée en au moins deux segments pour sa fabrication, sachant que la pale de rotor est segmentée en plus de deux segments (11, 14, 15) pour sa fabrication, sachant qu'on a prévu, au moins pour quelques-uns de ces segments, des moules de fabrication séparés, à utiliser parallèlement dans le temps, et que les segments sont assemblés, pour la fabrication finale de la pale de rotor, à l'extérieur d'un moule de fabrication pour former une pale de rotor ou une partie de pale de rotor, sachant qu'au moins l'assemblage des segments se fait dans un dispositif d'assemblage séparé, en particulier dans un châssis collé, **caractérisé en ce qu'**on réalise, par deux subdivisions (9, 10) de la pale de rotor s'étendant sensiblement dans le sens de l'extension longitudinale de la pale de rotor, un segment longitudinal médian (11) de la pale de rotor qui comprend les ceintures (12) et les traverses (13).

2. Procédé selon la revendication 1, **caractérisé en ce que** la pale de rotor ou la partie de pale de rotor subit un traitement ultérieur à l'extérieur d'un moule de fabrication, sachant que la pale de rotor ou la partie de pale de rotor, en particulier, subit un traitement final à l'extérieur d'un moule de fabrication.

3. Procédé selon la revendication 1 ou 2, **caractérisé en ce que** les segments sont fabriqués suivant la technique de fabrication du plastique, sachant que dans la technique de fabrication du plastique, en particulier, on utilise au moins une résine et au moins une couche de fibres, en particulier des fibres de verre et/ou des fibres de carbone.

4. Procédé selon la revendication 3, **caractérisé en ce qu'**on utilise une technique de moulage par transfert (Resin Transfer Moulding ; RTM).

5. Procédé selon la revendication 3 ou 4, **caractérisé en ce qu'**on utilise une technique d'infusion (Resin Infusion Moulding ; RIM), en particulier une technique d'infusion sous vide (Vacuum Assisted Resin Infusion ; VAR).

6. Procédé selon l'une quelconque des revendications 3 à 5, **caractérisé en ce qu'**on utilise une technique de laminage.

7. Procédé selon l'une quelconque des revendications précédentes, **caractérisé en ce que** sont assemblés, dans le dispositif d'assemblage, une ou plusieurs traverses, une ou plusieurs ceintures, une ou plusieurs parties de pied de pale de rotor, au moins un segment d'extrémité de pale de rotor, des segments de coque et/ou des coques de pale de rotor formées de segments, sachant que, en particulier dans le dispositif d'assemblage, on colle ensemble des segments et/ou des (autres) composants, sachant qu'on a prévu au moins un dispositif de chauffe, de préférence au niveau du dispositif d'assemblage, en particulier, pour le chauffage, la recuisson, le séchage et/ou le durcissement des composants et/ou d'assemblages de composants.

8. Procédé selon l'une quelconque des revendications précédentes, **caractérisé en ce qu'**on durcit ou prédurcit tout d'abord les segments et/ou d'autres composants, qu'on les place ensuite dans le dispositif d'assemblage, qu'on les y assemble et qu'on sèche et/ou durcit ensuite l'assemblage et/ou le joint des segments et/ou des autres composants.

9. Procédé selon l'une quelconque des revendications précédentes, **caractérisé en ce qu'**on réalise une fabrication temporellement parallèle de composants, fabrication lors de laquelle les composants à fabriquer sont conçus, en particulier en fonction de leur type, de leur nature et/ou de leur taille, de telle sorte que les temps de remplissage des moules de fabrication, utilisés en parallèle à cette fin, soient ajustés les uns aux autres et/ou que le temps de remplissage du moule dont le remplissage est le plus long, lequel détermine la durée d'un cycle de fabrication, soit réduit au minimum.

10. Procédé selon l'une quelconque des revendications précédentes, **caractérisé en ce qu'**on préfabrique au moins un bloc ceinture-traverse par segmentation et qu'on le place dans le dispositif d'assemblage pour l'assemblage à d'autres segments de la pale de rotor, sachant que le bloc ceinture-support en particulier est fabriqué sous forme de longeron en caisson pour l'essentiel, comportant au moins deux ceintures et deux traverses.

11. Procédé selon l'une quelconque des revendications précédentes, **caractérisé en ce que** la pale de rotor est partagée par au moins une subdivision, s'étendant sensiblement dans le sens de l'extension longitudinale de la pale de rotor, au moins en un segment d'arête avant et un segment d'arête arrière.

12. Procédé selon l'une quelconque des revendications précédentes, **caractérisé en ce qu'**on a prévu les subdivisions de la pale de rotor jusqu'au travers des parties de pied de pale de rotor.

13. Procédé selon l'une quelconque des revendications précédentes, **caractérisé en ce qu'**on sépare un côté d'aspiration et un côté de pression dans la pale de rotor à des fins de segmentation.
